# EUROPEAN PATENT APPLICATION

(11) **EP 4 624 672 A1**
(43) Date of publication of application: **01.10.2025**
(21) Application number: 24219792.9
(22) Date of filing: 13.12.2024
(51) Int. Cl.: E02F 3/32, E02F 9/08, E02F 9/20

(54) **WORKING VEHICLE**

(30) Priority: 29.03.2024 JP 2024057109
(71) Applicant: Takeuchi MFG. Co., Ltd., Hanishina-gun, Nagano 389-0605 (JP)
(72) Inventor: TANAKA, Kenichi, Nagano 389-0605 (JP); OOYAMA, Hidaka, Nagano 389-0605 (JP); KOBAYASHI, Yuta, Nagano 389-0605 (JP)
(74) Representative: Liesegang, Eva

(57) **Abstract**

Provided is a working vehicle that can effectively cool cooled devices without compressing the small device housing space and, at the same time, can contribute to the reduction of the cost. A working vehicle includes: a work equipment that is operated by a pressurized oil that a hydraulic pump discharges; and an upper slew body where, in a device housing space formed in the upper slew body, a plurality of devices that includes a hydraulic pump and an electric motor that drives the hydraulic pump are housed. In the plurality of devices, cooled devices (an on-board charger, the electric motor, an inverter, an oil cooler) and one cooling fan for cooling the cooled devices exist. The cooled devices are arranged along a cooling air flow path A through which cooling air that is generated by the cooling fan flows.

## Description

### [Technical Field]

The present invention relates to a working vehicle.

### [Background Art]

As a working vehicle, there has been known a hydraulic excavator that includes: a lower traveling body having crawler mechanisms; an upper slew body mounted on the lower traveling body in a slewable manner; and a work equipment mounted on the upper slew body and configured to allow mounting of an attachment such as a bucket thereon.

With respect to such a hydraulic excavator, recently, the use of an electrically operated working vehicle where an electric motor is mounted on the hydraulic excavator in place of an engine and a hydraulic pump is driven by an electric motor has become popular or has been spreading. This is because such an electrically operated working vehicle has advantages that exhaust gas is not discharged and noises and vibrations are also largely reduced (see Japanese Patent No.5185082).

Although not illustrated in drawings, the working vehicle described in Japanese Patent No.5185082 includes, in the inside of an upper slew body, a hydraulic pump, an electric motor that drives the hydraulic pump, a cooling fan for cooling the electric motor (a first cooling fan), an oil cooler (a heat exchanger), and a cooling fan for cooling the oil cooler (a second cooling fan).

In the working vehicle described in Japanese Patent No.5185082, the first cooling fan is mounted on a rotary shaft of the electric motor, and the first cooling fan is rotated along with the rotation of the electric motor. With such an operation, outside air flows into the inside of the upper slew body as cooling air from an air intake port, and cools the electric motor. Further, by rotating the second cooling fan, outside air flows into the inside of the upper slew body from the air intake port as cooling air, and cools the oil cooler. On the other hand, cooling air generated by the second cooling fan is also introduced to a periphery of the electric motor. Accordingly, the second cooling fan has a function of cooling not only the oil cooler but also the electric motor.

According to the working vehicle described in Japanese Patent No.5185082, even in a case where cooling ability of the first cooling fan is lowered along with lowering of a rotational speed of the electric motor at the time of idling, the electric motor can be cooled by cooling air generated by the second cooling fan. Accordingly, lowering of cooling ability with respect to the electric motor at the time of idling can be suppressed.

### [Citation List]

### [Patent literature]

[Patent literature 1] Japanese Patent No.5185082

### [Summary of Invention]

### [Technical Problem]

With respect to a working vehicle, a demand for a more small-sized working vehicle is high depending on a content of a work or a situation of a working site. In such a small-sized working vehicle, a space for housing various equipment (hereinafter referred to as device housing space) becomes inevitably small. Accordingly, there is no way but to house, in high density, an electric motor, an inverter, an oil cooler and, further, a hydraulic pump driven by the electric motor, a battery for supplying electricity to the electric motor, piping for delivering a pressurized oil discharged from the hydraulic pump, wiring cables of an electricity system and the like in the device housing space. Accordingly, in a small-sized working vehicle, the manner how effectively the device housing space is used becomes important.

In the working vehicle described in Japanese Patent No.5185082, as described above, the working vehicle includes, as the cooling fans, two cooling fans consisting of the cooling fan for cooling the electric motor (the first cooling fan) and the cooling fan for cooling the oil cooler (second cooling fan). Accordingly, the small-sized working vehicle has a drawback that the small device housing space is compressed. Still further, there exists a drawback that the use of two cooling fans pushes up the cost.

The present invention has been made in view of such circumstances, and it is an object of the present invention to provide a working vehicle that can effectively cool cooled devices without compressing a small device housing space and, at the same time, can contribute to the reduction of the cost.

### [Solution to problem]

[1] A working vehicle according to the present invention includes: a work equipment that is operated by a pressurized oil that a hydraulic pump discharges; and a working vehicle body where, in a device housing space formed in the working vehicle body, a plurality of devices that includes the hydraulic pump and an electric motor that drives the hydraulic pump are housed. In the plurality of devices, cooled devices that include the electric motor, and a single cooling fan for cooling the cooled devices are included. The cooled devices are disposed along a cooling air flow path through which cooling air generated by the cooling fan flows.
[2] In the working vehicle according to the present invention, it is preferred that the device housing space is a space surrounded by an upper surface cover, a rear surface cover, a left side surface cover, a right side surface cover and a front surface cover of the working vehicle body. It is preferred that the cooling air flow path is formed between an air intake port located in one side surface cover out of the left side surface cover and the right side surface cover and an air discharge port located in the other side surface cover out of the left side surface cover and the right side surface cover.
[3] In the working vehicle according to the present invention, it is preferred that the cooled devices include an inverter for controlling the electric motor and an oil cooler for cooling the pressurized oil besides the electric motor. It is also preferred that the electric motor, the inverter and the oil cooler are arranged in order of the electric motor, the inverter and the oil cooler from an upstream side of cooling air that flows through the cooling air flow path. It is also preferred that the cooling fan is disposed between the oil cooler and the inverter and is arranged in a state that the cooling fan opposes the oil cooler.
[4] In the working vehicle according to the present invention, it is preferred that the cooling fan is a cooling fan attached to the oil cooler.
[5] In the working vehicle according to the present invention, it is preferred that a battery pack that supplies electricity to the electric motor is disposed in an upright state between the rear surface cover on one side and the electric motor and the inverter on the other side. It is also preferred that a plate on top of which the electric motor and the inverter are mounted is disposed between the battery pack and the front surface cover. It is also preferred that the plate is positioned in an intermediate portion of the device housing space in a vertical direction. It is also preferred that the plate has a function of a partition plate that partitions a space surrounded by the upper surface cover, the left side surface cover, the right side surface cover, the front surface cover and the battery pack in the device housing space into an upper space and a lower space using the plate as a boundary.
[6] In the working vehicle according to the present invention, it is preferred that the plate is disposed between the battery pack and the front surface cover such that an opening portion that allows air existing in the lower space to flow into the cooling air flow path is formed.
[7] In the working vehicle according to the present invention, it is preferred that the cooled devices further include an on-board charger, and the on-board charger, the electric motor, the inverter and the oil cooler are arranged in order of the on-board charger, the electric motor, the inverter and the oil cooler from an upstream side of cooling air that flows through the cooling air flow path.

### [Advantageous effects of the invention]

In the vehicle working vehicle according to the present invention, the respective cooling object equipment that form the plurality of respective cooling object equipment are arranged in a row along the cooling air flow path through which cooling air generated by the cooling fan flows, and the cooled devices are cooled by one cooling fan. According to the working vehicle of the present invention, the cooled devices can be cooled by one cooling fan and hence, it is possible to provide the working vehicle that can effectively cool the cooled devices without compressing the small device housing space and, at the same time, and can also contribute to the reduction of cost.

### [Brief Description of Drawings]

Fig. 1 is an external perspective view of a working vehicle 1 according to an embodiment as viewed from an oblique rear side.
Fig. 2 is an external perspective view of the working vehicle 1 according to the embodiment as viewed from an oblique front side.
Fig. 3 is a front view illustrating a device housing space 60 when the working vehicle 1 is viewed from a front side.
Fig. 4 is perspective view illustrating the device housing space 60 when the working vehicle 1 is viewed from an oblique front side.
Fig. 5 is a view illustrating a configurational example in a case where a cooling air flow duct is formed in a cooling air flow path A.

### [Description of embodiments]

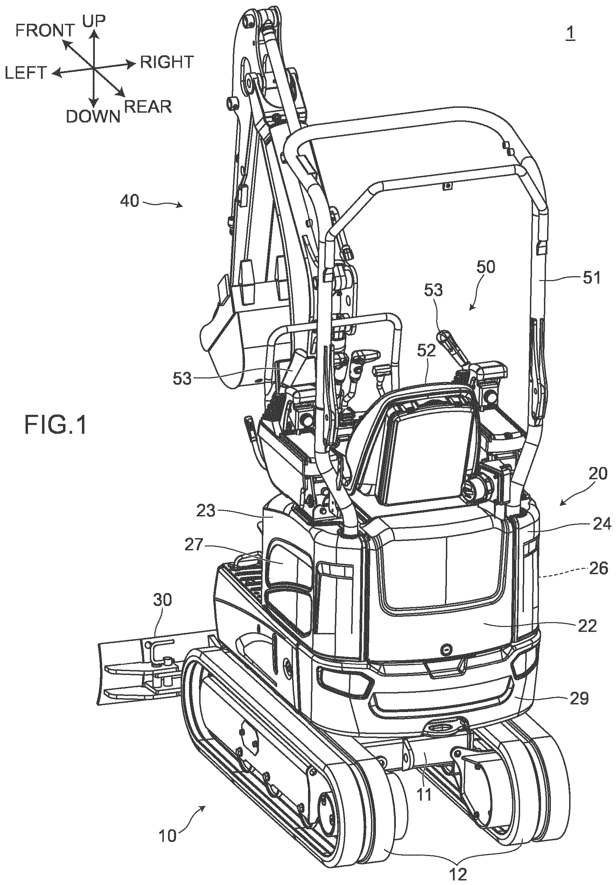

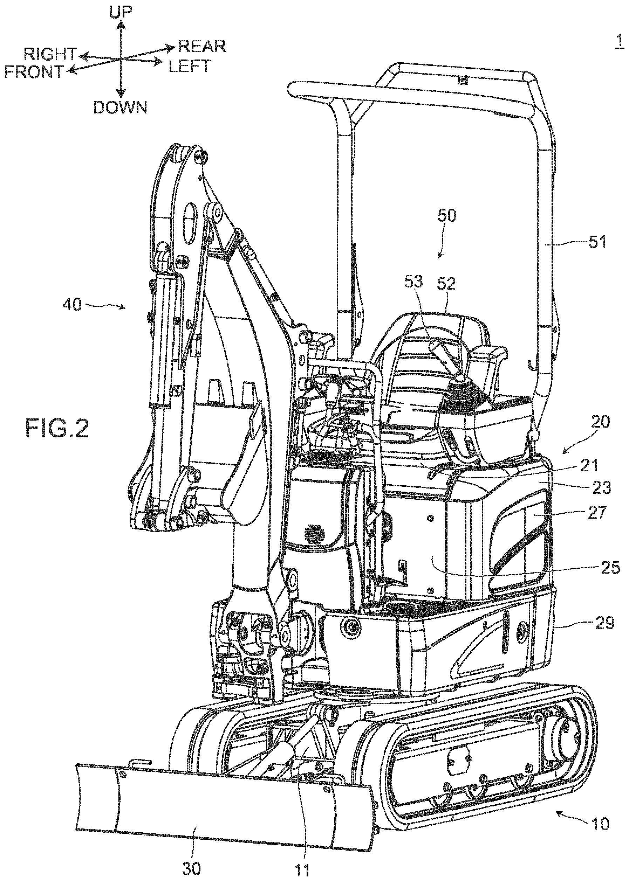

Hereinafter, an embodiment of the present invention is described with reference to drawings. In the embodiment described hereinafter, a crawler-type hydraulic excavator is described as an example of a working vehicle. First, the external appearance configuration of the working vehicle 1 according to the embodiment is described with reference to Fig. 1 and Fig. 2. The external appearance configuration of the working vehicle 1 according to the embodiment does not constitute the gist of the present invention and hence, the description of the external appearance configuration of the working vehicle 1 is only described schematically. Further, in the respective drawings used for describing the embodiment, members having identical configurations are given with the same symbols, and there may be cases where the repeated explanation of the members is omitted.

Further, in describing the working vehicle 1 according to the embodiment, in the case where it is necessary to indicate the left and the right, the front and the rear and the up and the down, assume a side where a blade 30 is mounted in the working vehicle 1 as "front" and a side opposite to the side where the blade 30 is mounted in the working vehicle 1 as "rear". Further, assume a side of a left side surface of the working vehicle 1 when the working vehicle 1 is viewed from a rear side as "left" and assume a side of a right side surface of the working vehicle 1 when the working vehicle 1 is viewed from a rear side as "right". Further, assume a bottom portion side of the working vehicle 1 as "down" and a side opposite to the bottom portion as "up".

In this embodiment, Fig. 1 is an external perspective view of the working vehicle as viewed from an oblique rear side, and Fig. 2 is an external perspective view of the working vehicle as viewed from an oblique front side. Fig. 1 and Fig. 2 are the external perspective views where the left side surface of the working vehicle 1 can be visually recognized. Arrows indicating the left and the right that are illustrated at a left upper portion of Fig. 2 express "left" and "right" of the working vehicle 1 when the working vehicle 1 is viewed from the rear side. Accordingly, the arrows expressing the left and the right in Fig. 2 are opposite to the left and the right as visually recognized in Fig. 2.

The working vehicle 1 includes, as illustrated in Fig. 1 and Fig. 2, a lower traveling body 10, an upper slew body (a working-use vehicle body) 20 that is mounted on an upper portion of the lower traveling body 10 in a slewable manner, a blade 30 that is mounted on a front portion of the lower traveling body 10, and a work equipment 40 that is mounted on a front portion of the upper slew body 20.

The lower traveling body 10 has left and right crawlers 12 that form a pair on both left and right sides of a traveling body frame 11. The blade 30 that is swingable in the vertical direction is mounted on the traveling body frame 11. A slew mechanism (not illustrated in the drawing) is mounted on an approximately center portion of an upper portion of the traveling body frame 11. The upper slew body 20 is slewable on a horizontal plane by the slew mechanism. The lower traveling body 10, the upper slew body 20, the blade 30 and the work equipment 40 are driven by respectively corresponding hydraulic actuators (a hydraulic motor, a hydraulic cylinder and the like).

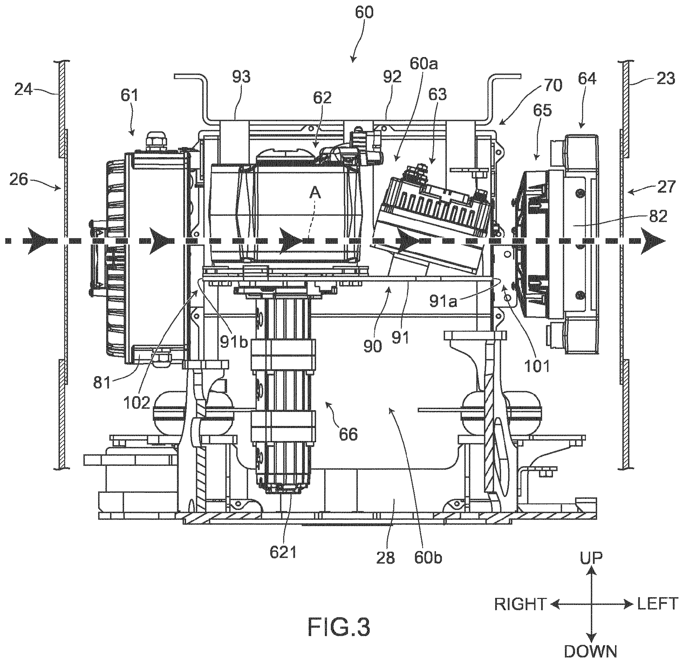

An upper surface, a rear surface, a left surface, a right surface and a front surface of the upper slew body 20 are covered by covers respectively, and a device housing space 60 (see Fig. 3) is formed in the upper slew body 20. In such a configuration, assume the covers that cover the upper surface, the rear surface, the left side surface, the right side surface and the front surface as an upper surface cover 21 (see Fig. 2), a rear surface cover 22 (see Fig. 1), a left side surface cover 23, a right side surface cover 24 (see Fig. 1), and a front surface cover 25 respectively (see Fig. 2). In this manner, the device housing space 60 is a space surrounded by the upper surface cover 21, the rear surface cover 22, the left side surface cover 23, the right side surface cover 24, and the front surface cover 25.

A canopy-type operator space 50 is disposed on an upper portion of the upper surface cover 21. In the operator cabin 50, a canopy pole 51, an operator seat 52, various control levers 53 and the like are disposed. On a lower portion of a rear surface of the upper slew body 20, a counterweight 29 that forms a portion of the rear surface is mounted.

The upper surface cover 21, the rear surface cover 22, the left side surface cover 23, the right side surface cover 24 and the front surface cover 25 may be respectively formed as separate bodies. However, out of these covers, two or more covers may be formed as an integral body. In the working vehicle 1 according to the embodiment, the upper surface cover 21 and the rear surface cover 22 are formed as an integral body.

In the device housing space 60 formed in such a manner, besides various equipment necessary for operating the working vehicle 1, piping for circulating pressurized oil, wiring of an electric system and the like are housed. In the small-sized working vehicle, in general, the device housing space 60 is small. Accordingly, in the device housing space 60, various equipment, piping for circulating pressurized oil, wiring of the electric system and the like are housed in high density.

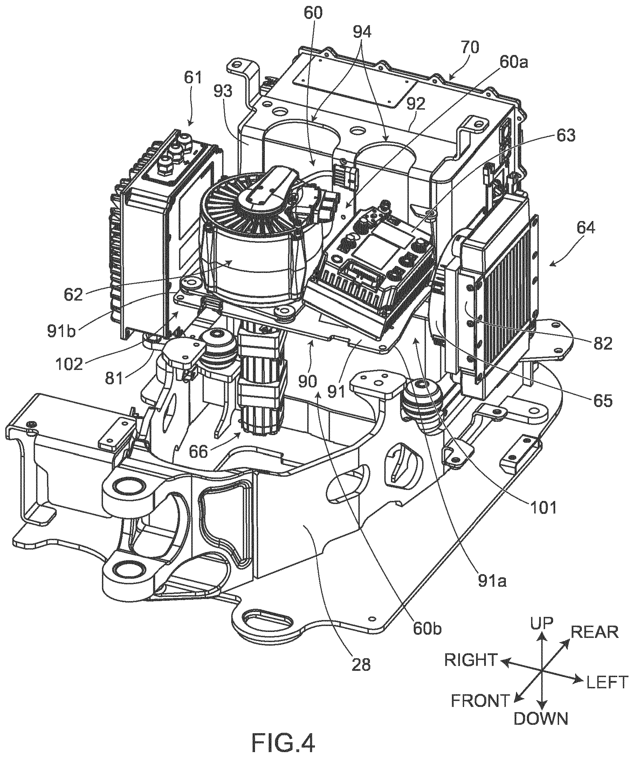

Further, in the right side surface cover 24 of the upper slew body 20, an air intake port 26 for allowing air to flow into the device housing space 60 as cooling air is formed. In the left side surface cover 23 of the upper slew body 20, an air discharge port 27 for discharging cooling air is formed. The air intake port 26 formed in the right side surface cover 24 exists at a position that cannot be visually recognized in Fig. 1 and Fig. 2. Accordingly, although the air intake port 26 is not illustrated in Fig. 1 and Fig. 2, the air intake port 26 is formed in the right side surface cover 24 at a position that opposes or approximately opposes the air discharge port 27 formed in the left side surface cover 23. The flow of cooling air between the air intake port 26 and the air discharge port 27 is described later with reference to Fig. 3 and Fig. 4.

Fig. 3 is a front view illustrating the device housing space 60 when the working vehicle 1 is viewed from a front side. Further, Fig. 4 is a perspective view illustrating the device housing space 60 when the working vehicle 1 is viewed from an oblique front side. Arrows indicating the left and the right illustrated at respective right lower portions of Fig. 3 and Fig. 4 indicate "left" and "right" of the working vehicle 1 when the working vehicle 1 is viewed from a rear side. Accordingly, in the same manner as Fig. 2, the left and the right are opposite to the left and the right as viewed in Fig. 3 and Fig. 4. That is, the left side (the side of the left side surface cover 23 in Fig. 1) in the working vehicle 1 is illustrated on a right side in Fig. 3 and Fig. 4, and the right side (the side of the right side surface cover 24 in Fig. 1) in the working vehicle 1 is illustrated on a left side in Fig. 3 and Fig. 4.

Further, Fig. 3 and Fig. 4 are views illustrating the arrangement of mainly cooled devices (described in detail later), a cooling fan 65 for cooling the cooled devices and a battery pack 70 out of the equipment housed in the device housing space 60. Accordingly, the illustration of piping for circulating pressurized oil, wiring of an electric system and the like is omitted.

As described previously, the device housing space 60 is the space surrounded by the upper surface cover 21, the rear surface cover 22, the left side surface cover 23, the right side surface cover 24 and the front surface cover 25 of the upper slew body 20 that forms the working vehicle body. However, in Fig. 4, the illustration of these respective covers is omitted. On the other hand, in Fig. 3, out of these respective covers, a portion of the left side surface cover 23 and a portion of the right side surface cover 24 are illustrated in cross section.

In this embodiment, assume that the cooled devices in the working vehicle 1 according to the embodiment are an on-board charger 61, an electric motor 62, an inverter 63 and an oil cooler 64. There may be a case where the on-board charger 61 is not treated as a cooling object equipment. However, in this embodiment, the on-board charger 61 is also treated as one of cooling object equipment.

In the device housing space 60, one cooling fan 65 is disposed so as to cool the cooled devices (the on-board charger 61, the electric motor 62, the inverter 63 and the oil cooler 64). The cooled devices are arranged along a cooling air flow path through which the cooling air generated by the cooling fan 65 flows.

In Fig. 3, the cooling air flow path is indicated by one broken arrow A that connects the air intake port 26 formed in the right side surface cover 24 and the air discharge port 27 formed in the left side surface cover 23 in a straight line. However, the broken arrow A indicates the cooling air flow path through which cooling air flows for the sake of convenience, and does not express the actual flow of cooling air. Hereinafter, the broken arrow A is described as the cooling air flow path A.

The on-board charger 61, the electric motor 62, the inverter 63 and the oil cooler 64 are disposed in order of the on-board charger 61, the electric motor 62, the inverter 63 and the oil cooler 64 from an upstream side of cooling air that flows through the cooling air flow path A. The cooling fan 65 is disposed between the oil cooler 64 and the inverter 63, and is disposed so as to opposedly face the oil cooler 64. In the working vehicle 1 according to the embodiment, it is assumed that the cooling fan 65 is attached to the oil cooler 64. With such a configuration, in Fig. 3, the cooling fan 65 is illustrated as the structure that is integrally formed with the oil cooler 64.

In this embodiment, the upper surface cover 21, the rear surface cover 22 and the front surface cover 25 illustrated in Fig. 1 and Fig. 2 are not illustrated in Fig. 3 and Fig. 4. Hereinafter, the relationship between these respective covers disposed on one side and the respective cooling object equipment (the on-board charger 61, the electric motor 62, the inverter 63, the cooling fan 65 and the oil cooler 64) illustrated in Fig. 3 and Fig. 4 and a battery pack 70 disposed on the other side is described. The battery pack 70 has a function of supplying electricity to the electric motor 62 and a secondary battery such as a lithium ion battery and electric circuit parts and the like are stored in the battery pack 70.

The upper surface cover 21 is disposed over the on-board charger 61, the electric motor 62, the inverter 63, the cooling fan 65, the oil cooler 64 and the battery pack 70. The rear surface cover 23 is disposed behind the battery pack 70. The battery pack 70 is disposed upright between the rear surface cover 22 (see Fig. 1) disposed on one side and the electric motor 62 and the inverter 63 disposed on the other side. Further, the front surface cover 25 is disposed in front of the on-board charger 61, the electric motor 62, the inverter 63, the cooling fan 65 and the oil cooler 64. Further, between the battery pack 70 and the front surface cover 25, a plate 91 is disposed. The electric motor 62 and the inverter 63 are mounted on the plate 91. In the description of this embodiment, the plate 91 is described as "horizontal plate 91". The horizontal plate 91 is provided as a portion of a bracket 90 described later. The configurations and the like of these horizontal plate 91 and the bracket 90 are described later.

When the cooling fan 65 is operated in a state where the cooled devices (the on-board charger 61, the electric motor 62, the inverter 63 and the oil cooler 64) are arranged along the cooling air flow path A as illustrated in Fig. 3, air flows into the device housing space 60 from the air intake port 26 formed in the right side surface cover 24 illustrated on the left side in Fig. 3 as cooling air. Then, cooling air that flows into the device housing space 60 from the air intake port 26 flows through the cooling air flow path A and, thereafter, is discharged from the air discharge port 27 formed in the left side surface cover 23 illustrated on a right side in Fig. 3.

In Fig. 3, the cooled devices (the on-board charger 61, the electric motor 62, the inverter 63, the oil cooler 64) are illustrated such that these members are arranged on a straight line that connects the air intake port 26 and the air discharge port 27 between the air intake port 26 and the air discharge port 27. However, it is not always the case that the cooled devices are disposed on the straight line that connects the air intake port 26 and the air discharge port 27. For example, it is not necessary that the entire surface of the air intake port 26 and the entire surface of the on-board charger 61 opposedly face each other. In other words, the air intake port 26 may be disposed at the position having slight displacement with respect to the on-board charger 61. That is, it is sufficient that the cooled devices are arranged in a row along the cooling air flow path A through which cooling air generated by the cooling fan 65 flows.

In the inside of the device housing space 60, various brackets exist for mounting various equipment. For example, in the inside of the device housing space 60, a bracket 81 (also referred to as a first bracket 81) for mounting the on-board charger 61, a bracket 82 (also referred to as a second bracket 82) for mounting the oil cooler 64, the bracket 90 (also referred to as a third bracket 90) for mounting the electric motor 62, the inverter 63 and the like exist. These respective brackets 81, 82 and 90 are mounted on a frame 28 (also referred to as a body frame 28) of the upper slew body 20.

To the third bracket 90 for mounting the electric motor 62 and the inverter 63, as illustrated in Fig. 4, the horizontal plate 91 that extends toward a front side, a horizontal plate 92 (also referred to the auxiliary horizontal plate 92) that extends toward a rear side, and a vertical plate 93 that is interposed between the horizontal plate 91 and the auxiliary horizontal plate 92 are integrally mounted. Further, the electric motor 62 and the inverter 63 are mounted on the horizontal plate 91.

As illustrated in Fig. 4, the auxiliary horizontal plate 92 is disposed so as to follow at least a portion of an upper surface of the battery pack 70. Further, as illustrated in Fig. 4, the vertical plate 93 is disposed so as to follow at least a portion of a front surface of the battery pack 70. In such a configuration, the front surface of the battery pack 70 means a surface of the battery pack 70 on a side where the battery pack 70 opposes the electric motor 62 and the inverter 63. It is preferred that the auxiliary horizontal plate 92 and the vertical plate 93 are not brought into contact with the battery pack 70.

As illustrated in Fig. 4, an opening portion 94 is formed in the auxiliary horizontal plate 92 and the vertical plate 93 such that the opening portion 94 is exposed in a portion of an upper surface and a front surface of the battery pack 70. By forming such an opening portion 94 in the auxiliary horizontal plate 92 and the vertical plate 93 of the third bracket 90, cooling air that flows through the cooling air flow path A impinges also on the battery pack 70. Accordingly, it is possible to acquire an advantageous effect that cooling air generated by the cooling fan 65 can be also used for cooling the battery pack 70.

Hereinafter, the horizontal plate 91 is further described. The horizontal plate 91 is positioned at an intermediate portion of the device housing space 60 in a vertical direction (also referred to as an intermediate portion of the battery pack 70 in a vertical direction). The horizontal plate 91 has a function of a partition plate that partitions a space surrounded by the upper surface cover 21, the left side surface cover 23, the right side surface cover 24, the front surface cover 25 and the battery pack 70 into the upper space 60a and the lower space 60b using the horizontal plate 91 as a boundary. In the upper space 60a disposed above the horizontal plate 91, the electric motor 62 and the inverter 63 exist. Further, the space (the upper space 60a) covered by the horizontal plate 91, the upper surface cover 21, the front surface cover 25 and the battery pack 70 forms a portion of the cooling air flow path A (see Fig. 3).

Further, the horizontal plate 91 is configured such that an opening portion that allows air existing in the lower space 60b to flow into the cooling air flow path A is formed. To be more specific, one end portion (an end portion on a cooling fan 65 side) 91a of the horizontal plate 91 is not brought into contact with the cooling fan 65, and an opening portion 101 is formed between one end portion 91a of the horizontal plate 91 and the cooling fan 65. Further, the other end portion (an end portion on an on-board charger 61 side) 91b of the horizontal plate 91 is not brought into contact with the on-board charger 61, and an opening portion 102 is formed between the other end portion 91b of the horizontal plate 91 and the on-board charger 61.

In the working vehicle 1 according to the embodiment, the electric motor 62 is mounted on the horizontal plate 91 such that a rotary shaft 621 (see Fig. 3) extends in a vertical direction. The rotary shaft 621 of the electric motor 62 penetrates the horizontal plate 91 and extends downward beyond the horizontal plate 91, and a plurality of hydraulic pumps 66 is connected to the downwardly extending rotary shaft 621 in series. To realize such a configuration, a through hole (not illustrated in the drawing) that allows the rotary shaft 621 of the electric motor 62 to pass therethrough is formed in the horizontal plate 91. This through hole also has a function of allowing air existing in the lower space 60b to flow into the cooling air flow path A in the same manner as the opening portions 101, 102 described above.

In the working vehicle 1 according to the embodiment, the cases are exemplified where a plurality of opening portions that allows air existing in the lower space 60b to flow into the cooling air flow path A are formed. However, all opening portions described above are not indispensable, and it is sufficient that air existing in the lower space 60b can be properly allowed to flow into the cooling air flow path A.

The plurality of hydraulic pumps 66 mounted on the rotary shaft 621 of the electric motor 62 discharge a pressurized oil for operating the lower traveling body 10, the upper slew body 20, the blade 30, the excavator device 40 and the like. Pressurized oils discharged from the plurality of respective hydraulic pumps 66 are respectively supplied to the corresponding hydraulic actuators (the hydraulic motor, the hydraulic cylinders and the like). The point that the hydraulic actuators are operated by pressurized oils discharged from the plurality of respective hydraulic pumps 66 is departed from the gist of the present invention and hence, the description of this point is omitted.

The arrangement of the cooled devices (the on-board charger 61, the electric motor 62, the inverter 63 and the oil cooler 64) and the cooling fan 65 are described. By arranging the cooled devices and the cooling fan 65 in this manner, the cooled devices (the on-board charger 61, the electric motor 62, the inverter 63 and the oil cooler 64) can be efficiently cooled by using one cooling fan 65.

That is, by operating the cooling fan 65, air that flows from the air intake port 26 (see Fig. 3), that is, cooling air flows through the cooling air flow path A, and is discharged from the air discharge port 27. At this point of time, cooling air flows along an outer peripheral surface of the on-board charger 61 and, thereafter, flows along an outer peripheral surface of the electric motor 62. Then, cooling air further flows along an outer peripheral surface of the inverter 63 and, thereafter, flows through the oil cooler 64, and is discharged from the air discharge port 27 (see Fig. 3).

By allowing cooling air to flow in this manner, the on-board charger 61, the electric motor 62, the inverter 63 and the oil cooler 64 can be cooled. The cooling fan 65 is mounted on the oil cooler 64 in an attached manner and hence, cooling air generated by the cooling fan 65 directly impinges on the oil cooler 64.

In this embodiment, the electric motor 62 is disposed on an upstream side of cooling air in the cooling air flow path A. The reason that such an arrangement is adopted is that the electric motor 62 is an equipment that generates high heat and hence, a higher cooling effect can be obtained by arranging the electric motor 62 on the upstream side of cooling air. In the working vehicle 1 according to the embodiment, the case is described where the on-board charger 61 is disposed on a more upstream side of cooling air than the electric motor 62. One of the reasons that such arrangement is adopted may be that, in a case where a charging cable from an external power source is connected to the on-board charger 61, it is convenient to arrange the on-board charger 61 at the position close to an openable and closable cover (the right side surface cover 24).

The space (the upper space 60a) that is surrounded by the horizontal plate 91, the upper surface cover 21, the front surface cover 25 and the battery pack 70 is not a sealed space. However, the space (the upper space 60a) forms a portion of the cooling air flow path A (see Fig. 3) as described above. In this case, the horizontal plate 91, the upper surface cover 21, the front surface cover 25 and the battery pack 70 play a role of guiding the flow of cooling air to the electric motor 62 and the inverter 63. Accordingly, it is possible to suppress cooling air that flows to the electric motor 62 and the inverter 63 from spreading in a wide range. As a result, it is possible to efficiently cool the electric motor 62 and the inverter 63 that are liable to easily generate high heat.

As described previously, it is configured that the opening portion that allows air existing in the lower space 60b to flow into the cooling air flow path A is formed in the horizontal plate 91. With such a configuration, air existing in the lower space 60b and having a relatively low temperature is allowed to flow into the cooling air flow path A. Accordingly, it is possible to prevent a temperature of cooling air that flows through the cooling air flow path A from being excessively increased.

That is, there may be a case where a temperature of cooling air that flows through the cooling air flow path A becomes a high temperature due to heat that the electric motor 62, the inverter 63 and the like generate. On the other hand, in many cases, air existing in the lower space 60b maintains a low temperature compared to cooling air that flows through cooling air flow path A and becomes a high temperature. Accordingly, by allowing air existing in the lower space 60b to flow into the cooling air flow path A, it is possible to lower the temperature of cooling air that becomes a high temperature. Accordingly, an effect of cooling the electric motor 62, the inverter 63 and the oil cooler 64 can be enhanced.

As has been described heretofore, in the working vehicle 1 according to the embodiment, the cooled devices (the on-board charger 61, the electric motor 62, the inverter 63, the oil cooler 64) are arranged in a row along the cooling air flow path A through which cooling air flows. Further, the cooled devices are cooled by one cooling fan 65. In this manner, according to the working vehicle 1 of the embodiment, the cooled devices can be cooled by one cooling fan 65 and hence, it is possible to effectively cool the cooled devices without compressing the small device housing space and, at the same time, the configuration also contributes to the reduction of cost.

Further, in the working vehicle 1 according to the embodiment, the cooling fan 65 adopts the structure where the cooling fan 65 is attached to the oil cooler 64 so that the cooling fan 65 is integrally formed with the oil cooler 64. Accordingly, it is unnecessary to prepare the cooling fan 65 separately, and it is unnecessary to secure a dedicated arranging space for arranging the cooling fan 65 thus contributing to space saving.

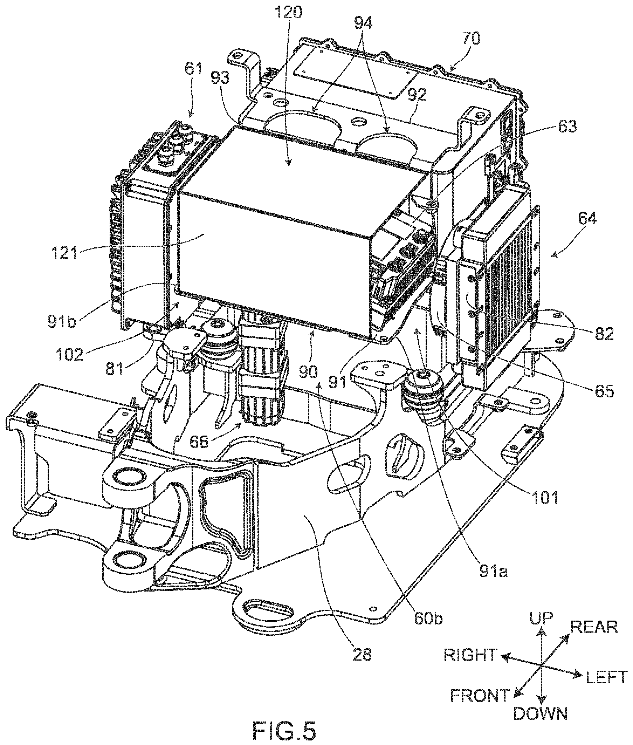

The present invention is not limited to the above-mentioned embodiments, and various modifications can be carried out without departing from the gist of the present invention. For example, the following modifications are also conceivable.
(1) According to the embodiment described above, the case where the on-board charger 61 forms one of cooling object equipment is exemplified. However, there is also a working vehicle in which the on-board charger 61 does not exist. Further, even in a case where the on-board charger 61 exists, there may be a case where it is unnecessary to set the on-board charger as the cooling object equipment depending on the position where the on-board charger or the like is disposed. In such a case, it is sufficient to set the electric motor 62, the inverter 63 and the oil cooler 64 as the colling object equipment. In this case, the electric motor 62, the inverter 63, and the oil cooler 64 are arranged in order of the electric motor 62, the inverter 63, the cooling fan 65 and the oil cooler 64 from an upstream side of cooling air that flows through the cooling air flow path.
(2) In the embodiment described above, the cases exemplified where the cooling fan 65 is the cooling fan attached to the oil cooler 64. However, the present invention is not limited to such a configuration. The cooling fan 65 may be prepared separately from the oil cooler 64. Also in this case, the cooled devices are cooled by one cooling fan 65.
(3) In the embodiment describe above, the working vehicle that travels by the crawlers 12 is exemplified. However, the present invention is not limited to the working vehicle that travels by the crawlers. Provided that the working vehicle uses an electric motor in place of an engine, a working vehicle that travels by tires may be used as the working vehicle. Further, the hydraulic excavator is exemplified as the working vehicle. However, the present invention is not limited to such a configuration. Provided that the working vehicle uses an electric motor in place of an engine, the present invention is also applicable to other working vehicles such as a skid-steer loader or the like in the same manner.
(4)A cooling air flow duct that positively guides the flow of cooling air may be formed in the cooling air flow path A. For example, as illustrated in Fig. 5, an example may be exemplified where, an enclosure member 121 having an end surface shape formed in an L-shape is prepared, and a cooling air flow duct 120 that surrounds the electric motor 62 and the inverter 63 along the cooling air flow path A (see Fig. 3) is formed by combining the enclosure member 121 with the horizontal plate 91 and the vertical plate 93 of the third bracket 90 that is already disposed.

By forming such a cooling air flow duct 120, cooling air that flows into from the air intake port 26 (see Fig. 3) flows through the cooling air flow duct 120, and cools the electric motor 62 and the inverter 63 existing in the cooling air flow duct 120. Accordingly, it is possible to allow cooling air to efficiently impinge on the electric motor 62 and the inverter 63 and hence, a cooling effect can be further enhanced. Such a cooling air flow duct 120 maybe formed as a cooling air flow duct capable of surrounding not only the electric motor 62 and the inverter 63 but also the entirety of the cooled devices including the electric motor 62 and the inverter 63.

Also in a case where such a cooling air flow duct 120 is formed, it is preferred that an opening portion (not illustrated in the drawing) that allows air existing outside the cooling air flow duct 120 to flow into the cooling air flow duct 120 is formed in the cooling air flow duct 120. With such a configuration, even when cooling air becomes a high temperature due to heat that the electric motor 62 dissipates, air existing outside the duct flows into the duct and hence, it is possible to prevent in advance a state where a cooling effect to the inverter 63 and the oil cooler 64 is lowered. The cooling air flow duct 120 is not limited to the configuration illustrated in Fig. 5, and the cooling air flow duct 120 can adopt various configurations.

### [List of reference signs]

1: working vehicle
20: upper slew body (working-use vehicle body)
21: upper surface cover
22: rear surface cover
23: left side surface cover
24: right side surface cover
25: front surface cover
26: air intake port
27: air discharge port
40: work equipment
60: device housing space
60a: upper space
60b: lower space
61: on-board charger
62: electric motor
63: inverter
64: oil cooler
65: cooling fan
66: hydraulic pump
70: battery pack
91: horizontal plate (plate)
101, 102: opening portion allowing air existing in lower space 60b to flow into cooling air flow path A
A: cooling air flow path

## Claims

1. A working vehicle comprising:
a work equipment that is operated by a pressurized oil that a hydraulic pump discharges; and
a working vehicle body where, in a device housing space formed in the working vehicle body, a plurality of devices that includes the hydraulic pump and an electric motor that drives the hydraulic pump are housed, wherein
in the plurality of devices, cooled devices that include the electric motor, and a single cooling fan for cooling the cooled devices are included, and
the cooled devices are disposed along a cooling air flow path through which cooling air generated by the cooling fan flows.

2. The working vehicle according to claim 1, wherein
the device housing space is a space surrounded by an upper surface cover, a rear surface cover, a left side surface cover, a right side surface cover and a front surface cover of the working vehicle body, and
the cooling air flow path is formed between an air intake port located in one side surface cover out of the left side surface cover and the right side surface cover and an air discharge port located in the other side surface cover out of the left side surface cover and the right side surface cover.

3. The working vehicle according to claim 1 or 2, wherein
the cooled devices include an inverter for controlling the electric motor and an oil cooler for cooling the pressurized oil besides the electric motor, and the electric motor, the inverter and the oil cooler are arranged in order of the electric motor, the inverter and the oil cooler from an upstream side of cooling air that flows through the cooling air flow path, and
the cooling fan is disposed between the oil cooler and the inverter and is arranged in a state that the cooling fan opposes the oil cooler.

4. The working vehicle according to claim 3, wherein
the cooling fan is a cooling fan attached to the oil cooler.

5. The working vehicle according to claim 3 or 4, wherein
a battery pack that supplies electricity to the electric motor is disposed in an upright state between the rear surface cover disposed on one side and the electric motor and the inverter disposed on the other side, and a plate on top of which the electric motor and the inverter are mounted is disposed between the battery pack and the front surface cover, and
the plate is positioned in an intermediate portion of the device housing space in a vertical direction, and has a function of a partition plate that partitions a space surrounded by the upper surface cover, the left side surface cover, the right side surface cover, the front surface cover and the battery pack in the device housing space into an upper space and a lower space using the plate as a boundary.

6. The working vehicle according to claim 5, wherein
the plate is disposed between the battery pack and the front surface cover such that an opening portion that allows air existing in the lower space to flow into the cooling air flow path is formed.

7. The working vehicle according to one of the claims 3 to 6, wherein
the cooled devices further include an on-board charger, and the on-board charger, the electric motor, the inverter and the oil cooler are arranged in order of the on-board charger, the electric motor, the inverter and the oil cooler from an upstream side of cooling air that flows through the cooling air flow path.
